(19)

**Europäisches Patentamt**

**European Patent Office**

**Office européen des brevets**

(11)     **EP 4 650 724 A1**

(12)     **EUROPEAN PATENT APPLICATION**

(43) Date of publication:
**19.11.2025  Bulletin 2025/47**

(21) Application number: **25162942.4**

(22) Date of filing: **11.03.2025**

(51) International Patent Classification (IPC):
**G01D 18/00** (2006.01)

(52) Cooperative Patent Classification (CPC):
**G01D 18/001;** G01D 18/008

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2024  US 202418664649**

(71) Applicant: Allegro MicroSystems, LLC
**Manchester, NH 03103 (US)**

(72) Inventor: **PAVLOV, Emil
69123 Heidelberg (DE)**

(74) Representative: **South, Nicholas Geoffrey
Venner Shipley LLP
200 Aldersgate
London EC1A 4HD (GB)**

(54)     **SYSTEMS, METHODS, AND TECHNIQUES FOR LINEARIZING SENSOR DEVICE MEASUREMENTS**

(57)     Disclosed are systems, methods, and techniques for linearizing sensor device rotation angle measurements. In particular, described are systems, methods, and techniques for linearizing sensor device rotation angle measurements without knowledge of actual rotation angles of a target. That is, using systems, methods, and techniques disclosed herein, a sensor device may self-linearize rotation angle measurements of a target. In some embodiments, a linearization process may be applied continuously or periodically over time so as to address changes in the nonlinearities of a rotation angle measurement system.

EP 4 650 724 A1

## Description

### BACKGROUND

Sensor devices are often used to monitor parameters of a system. For example, sensor devices may be used to measure an angle of rotation of a rotation object, such as a rotor of an electric motor. The measured angle information may then be used to control the motor. For example, a controller may continuously receive a measured angle of rotation of the rotor, and may use this information to commutate the motor. That is, the measured angle information may be used by the controller to switch currents in motor windings, producing magnetic fields that cause the rotor to rotate. The controller can then control aspects of the motor, such as speed and torque, based on the measured angle information. Numerous applications in industries, spanning from industrial automation and robotics, to electronic power steering and motor position sensing, may require monitoring of a rotation angle of a rotating shaft.

### SUMMARY

Disclosed are example systems, methods, and techniques for linearizing sensor device rotation angle measurements. In particular, described are example systems, methods, and techniques for linearizing sensor device measurements of rotation angles of a target without knowledge of actual rotation angles of the target. That is, using systems, methods, and techniques disclosed herein, a sensor device may self-linearize rotation angle measurements of a target. In some embodiments, a linearization process may be applied continuously or periodically over time, so as to address changes in the nonlinearities of a rotation angle measurement system. The systems, methods, and techniques described herein may find use in a wide variety of applications including, but not limited to, magnetic field angle sensor devices that detect an angle of rotation of a magnet.

In accordance with some embodiments, there is provided a method of linearizing an output representing a detected angle of a target. The method comprises determining initial values of angles of rotation of the target based on received signal values representative of the target, and determining speeds of rotation of the target corresponding to the initial values. The method also comprises extracting the speeds corresponding to a span of the initial values, and identifying signals of different frequencies from the extracted speeds. The method further comprises determining angle error values based on the identified signals, and linearizing the output based on the determined angle error values.

In some embodiments, the method further comprises receiving the signal values representative of the target from sensing elements. The method also comprises measuring an elapsed amount of time during which the signal values are received, and determining the speeds of rotation based on the initial values and the elapsed amount of time.

In further embodiments, the span of the initial values corresponds to 360° of rotation. In still further embodiments, a first one of the signals identified from the extracted speeds includes a frequency having one period over the 360°, and a second one of the signals identified from the extracted speeds includes a frequency having two periods over the 360°. In some embodiments, the signals identified from the extracted speeds do not include signals having frequencies with eight or more periods over the 360°.

In still further embodiments, the signal values are received from two different sensing elements that are placed orthogonally with respect to each other so that sensing by a first one of the sensing elements is indicative of a sine function and sensing by a second one of the sensing elements is indicative of a cosine function when the two different sensing elements are aligned with the target. In some embodiments, each of the initial values of angles of rotation is calculated as an arctangent of a first signal value received from one of the sensing elements and a second signal value received from the other sensing element, the first signal value and the second signal value being received at the same time.

In some embodiments, the speeds of rotation are determined by numerically differentiating the initial values of angles of rotation with respect to time. In further embodiments, the speeds of rotation are determined by differentiating the initial values of angles of rotation with respect to time using a differentiator circuit. In still further embodiments, identifying the signals of different frequencies comprises extracting the signals with a multi-band pass filter circuit.

In further embodiments, identifying the signals of different frequencies comprises computing a Fourier transform of the extracted speeds, and identifying from the extracted speeds a first signal having one period over a span of 360° and a second signal having two periods over a span of 360° based on the Fourier transform. In still further embodiments, determining the angle error values comprises integrating the identified signals of different frequencies to obtain the angle error values as a function of time. In some embodiments, the determined angle error values are utilized as an approximation of an error between an angle of the target sensed by sensing elements as compared to an actual angle of the target. In further embodiments, linearizing the output further comprises applying the angle error values as linearization coefficients to calculate a detected angle of the target. In still further embodiments, the target is a magnet, and the signal values representative of the target are provided by one or more of a giant magnetoresistor (GMR) field sensing element, a tunnel magnetoresistor (TMR) field sensing element, a Hall effect field sensing element, or a receiving coil field sensing element.

Furthermore, in accordance with some embodiments, there is provided a device comprising a memory storing instructions and a controller. The controller, when executing the instructions, is configured to determine initial values of angles of rotation of a target based on received signal values representative of the target, and to determine speeds of rotation of the target corresponding to the initial values. The controller is further configured to extract the speeds corresponding to a span of the initial values, and to identify signals of different frequencies from the extracted speeds. The controller is still further configured to determine angle error values based on the identified signals, and to linearize an output corresponding to detected angles of the target based on the determined angle error values.

In some embodiments, the device further comprises sensing elements. In further embodiments, the controller, when executing the instructions, is further configured to receive the signal values representative of the target from the sensing elements, and measure an elapsed amount of time during which the signal values are received. The controller is further configured to determine the speeds of rotation based on the initial values and the elapsed amount of time.

In further embodiments, the signal values are received by the controller from two different sensing elements that are placed orthogonally with respect to each other so that sensing by a first one of the sensing elements is indicative of a sine function and sensing by a second one of the sensing elements is indicative of a cosine function when the two different sensing elements are aligned with a target. In still further embodiments, each of the initial values of angles of rotation is calculated by the controller as an arctangent of a first signal value received from one of the sensing elements and a second signal value received from the other sensing element, the first signal value and the second signal value being received by the controller at the same time.

In still further embodiments, the target is a magnet and the sensing elements comprise one or more of a giant magnetoresistance (GMR) field sensing element, a tunnel magnetoresistance (TMR) field sensing element, a Hall effect field sensing element, or a receiving coil field sensing element. In some embodiments, the controller, when executing the instructions, is further configured to apply the angle error values as linearization coefficients to calculate a detected angle of the target.

Additionally, in accordance with some embodiments, there is provided a non-transitory computer-readable medium storing instructions that, when executed by a controller, cause the controller to perform a method comprising determining initial values of angles of rotation of a target based on received signal values representative of the target. The method also comprises determining speeds of rotation of the target corresponding to the initial values, and extracting the speeds for a span of the initial values. The method further comprises identifying signals of different frequencies from the filtered speeds, and determining angle error values based on the identified signals. The method still further comprises linearizing an output corresponding to detected angles of the target based on the determined angle error values.

Before explaining example embodiments consistent with the present disclosure in detail, it is to be understood that the disclosure is not limited in its application to the details of constructions and to the arrangements set forth in the following description or illustrated in the drawings. The disclosure is capable of being practiced and carried out in various ways. Also, it is to be understood that the phraseology and terminology employed herein, as well as in the abstract, are for the purpose of description and should not be regarded as limiting.

It is to be understood that both the foregoing general description and the following detailed description are explanatory only and are not restrictive of the claimed subject matter.

## BRIEF DESCRIPTION OF THE DRAWINGS

The accompanying drawings are incorporated in and constitute part of this specification. The drawings, together with the description, illustrate and serve to explain the principles of various example embodiments of the disclosure.

FIG. 1A shows an example system with an on-axis arrangement for detecting rotation angles of a target.

FIG. 1B shows an example system with an off-axis arrangement for detecting rotation angles of a target.

FIG. 2A shows an example graph of measured rotation angles of a target versus actual rotation angles of the target.

FIG. 2B shows an example graph of angle error of measured rotation angles of a target versus actual rotation angles of the target.

FIG. 3A shows a block diagram of an example sensor device, consistent with embodiments of the present disclosure.

FIG. 3B shows a block diagram of an example sensor device with differentiator circuitry and a multi-band pass filter, consistent with embodiments of the present disclosure.

FIG. 4 shows an example graph of voltages received from magnetic field sensing elements over measured rotation angles of a target.

FIG. 5 shows an example process for linearizing rotation angle measurements of a target by a sensor device, consistent with embodiments of the present disclosure.

FIG. 6A shows an example passive differentiator circuit utilizing a capacitor, consistent with embodiments of the present disclosure.

FIG. 6B shows an example passive differentiator circuit utilizing an inductor, consistent with embodiments of the present disclosure.

FIG. 6C shows an example active differentiator circuit utilizing an operational amplifier, consistent with embodiments of the present disclosure.

FIG. 7 shows an example graph of magnetic input signals utilized in a simulation.

FIG. 8 shows an example graph of simulated rotation speeds of a simulated target utilized in a simulation.

FIG. 9 shows an example graph of angle error of simulated rotation angles of a simulated target measured by a simulated sensor device as compared to simulated actual rotation angles of the simulated target.

FIG. 10 shows an example graph of calculated speed of simulated rotation angles of a simulated target measured by a simulated sensor device as compared to simulated actual rotation speeds of the simulated target.

FIG. 11 shows an example graph of performance of linearizing simulated angle measurements by a simulated sensor device versus not linearizing the simulated angle measurements by the simulated sensor device.

FIG. 12 shows an example computing environment, consistent with embodiments of the present disclosure.

FIG. 13 shows an example computing device, consistent with embodiments of the present disclosure.

The drawings are not necessarily to scale, or inclusive of all elements of a system, emphasis instead generally being placed upon illustrating the concepts, structures, and techniques sought to be protected herein.

## DETAILED DESCRIPTION

A magnetic field sensor device may be used to determine a rotation angle of a rotation object. With a magnetic field sensor device, one or more elements of the sensor device that are responsive to a magnetic field may be positioned near a rotation object and may either directly detect a magnetic field generated by the rotation object (e.g., if the rotation object is magnetized) or detect a magnetic field of a magnet attached to the rotation object. A magnetic field angle sensor device may be a good choice for fast, reliable, contactless measurement of the angular position of a system. This may be particularly true in dirty environments, where optical sensor devices, for example, may not be a good fit due to dirt on the sensor device or the feature being sensed, causing errors in such an environment.

An object monitored by a sensor device is often referred to as a target. Accordingly, an object whose characteristics are sensed by the sensor device, such as a magnet or magnetized rotation object, may be referred to as a "target" herein.

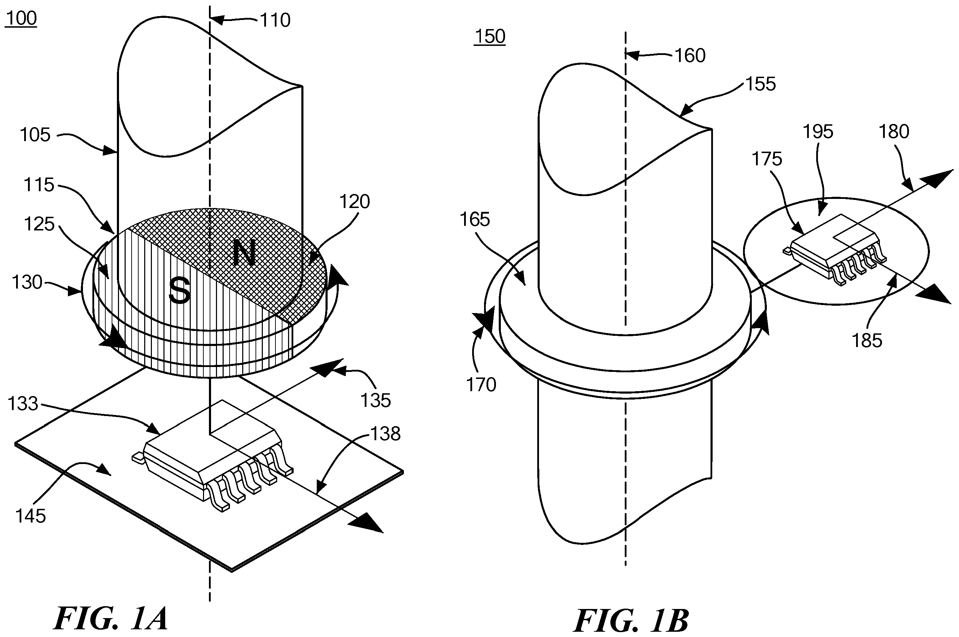

FIGs. 1A and 1B show example systems 100 and 150, respectively, that may be used to measure a rotation angle of a rotation object using a magnetic field sensor device configured to linearize rotation angle measurements in accordance with example embodiments of the disclosure. In systems 100 and 150, the rotation objects comprise shafts (e.g., shaft 105 of system 100, shaft 155 of system 150), such as rotors, and are illustrated as rotating around an axis (e.g., axis 110 of system 100, axis 160 of system 150). The rotation object can rotate around an axis clockwise or counterclockwise, or can rotate clockwise at some times and counterclockwise at other times. In FIGs. 1A and 1B, arrows 130 and 170 of systems 100 and 150, respectively, illustrate a counterclockwise rotation of a rotation object about an axis, when viewed along the axis of rotation (e.g., axis 110 of FIG. 1A, axis 160 of FIG. 1B) from above. Although FIGs. 1A and 1B illustrate example systems where a shaft or rotor rotates, the disclosure is not so limited. A person of ordinary skill in the art would recognize that magnetic field sensor devices may be used to detect a rotation angle of any object that rotates, not just shafts or rotors, so long as that object is magnetized or has a magnet attached to it.

In some embodiments, a rotation object (e.g., rotation object 105, rotation object 155) may be magnetized, such that a magnetic field sensor device may sense a magnetic field generated by the rotation object. Alternatively, a magnet may be attached to a rotation object and the magnet may generate a magnetic field, allowing for detection of the magnetic field by a magnetic field sensor device. The magnet may be attached such that the magnet rotates with the rotation object. For example, FIG. 1A illustrates an example system 100 where a disc magnet 115 has been attached to an end (e.g., bottom) of rotation object 105. FIG. 1B illustrates an example system 150 where a ring magnet 165 has been attached at a point along rotation object 155, with rotation object 155 passing through ring magnet 165. The disclosure is not limited to the examples shown in FIGs. 1A and 1B. A magnet may be attached at any point in relation to a rotation object, so long as the magnet rotates with the rotation object. As one example, although not shown, a magnet may be attached to another end (e.g., top) of rotation object 105.

In example system 100 of FIG. 1A, magnet 115 is shown as being a diametrically magnetized disc magnet with a north pole 120 and a south pole 125. In example system 150 of FIG. 1B, magnet 165 is shown as being a ring magnet. However, the disclosure is not limited to these examples. A person of ordinary skill in the art would recognize that any form factor of magnet may be used, including, for example, disc magnets, ring magnets, bar magnets, horseshoe magnets, cylinder magnets, or any other form factor of a magnet.

A person of ordinary skill in the art would also recognize that a magnet (e.g., magnet 115 of FIG. 1A, magnet 165 of FIG. 1B) may be a permanent magnet that stays magnetized once magnetized, a temporary magnet that behaves like a magnet only when near a magnetic field, an electromagnet that behaves like a magnet only when electricity is applied, or any other type of magnet. A person of ordinary skill in the art would recognize that a magnet (e.g., magnet 115 of FIG. 1A, magnet 165 of FIG. 1B) may be made of any type of magnetic material, such as neodymium (e.g., neodymium-iron-boron (NdFeB)), samarium cobalt (e.g., SmCo), alnico (e.g., aluminum, nickel, cobalt), ceramic or ferrite (e.g., strontium carbonate, iron oxide), or any other type of magnetic material. Although magnet 115 in FIG. 1A is illustrated as being diametrically magnetized, the disclosure is not so limited. A magnet (e.g., magnet 115 of FIG. 1A, magnet 165 of FIG. 1B) used in a system (e.g., system 100 of FIG. 1A, system 150 of FIG. 1B) may, for example, instead be axially magnetized. And although magnet 115 in FIG. 1A shows one north pole 120 and one south pole 125, the disclosure is not so limited. A person of ordinary skill in the art would recognize that a magnet (e.g., magnet 115 of FIG. 1A, magnet 165 of FIG. 1B) may have any number of north and south poles.

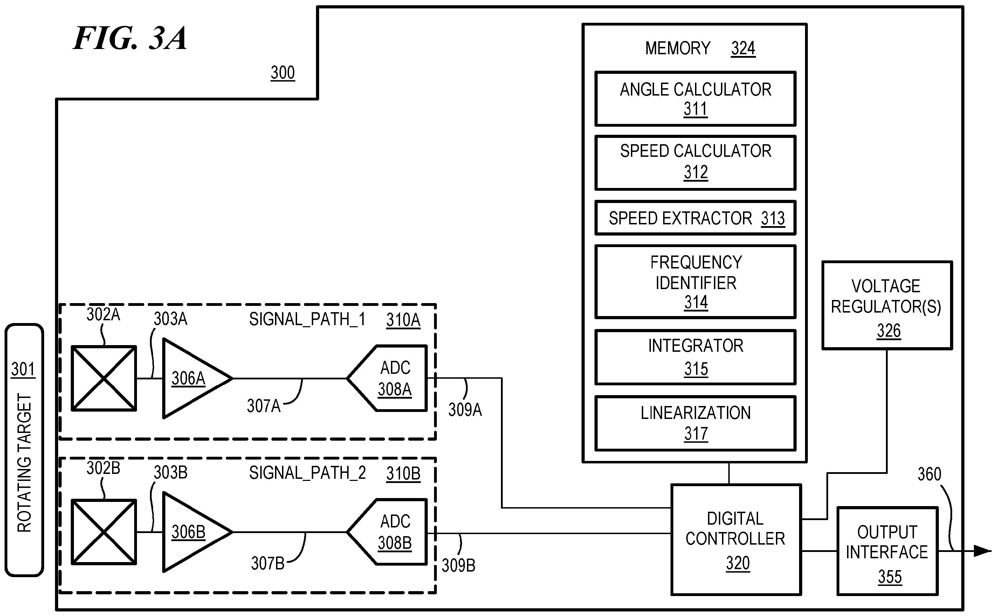

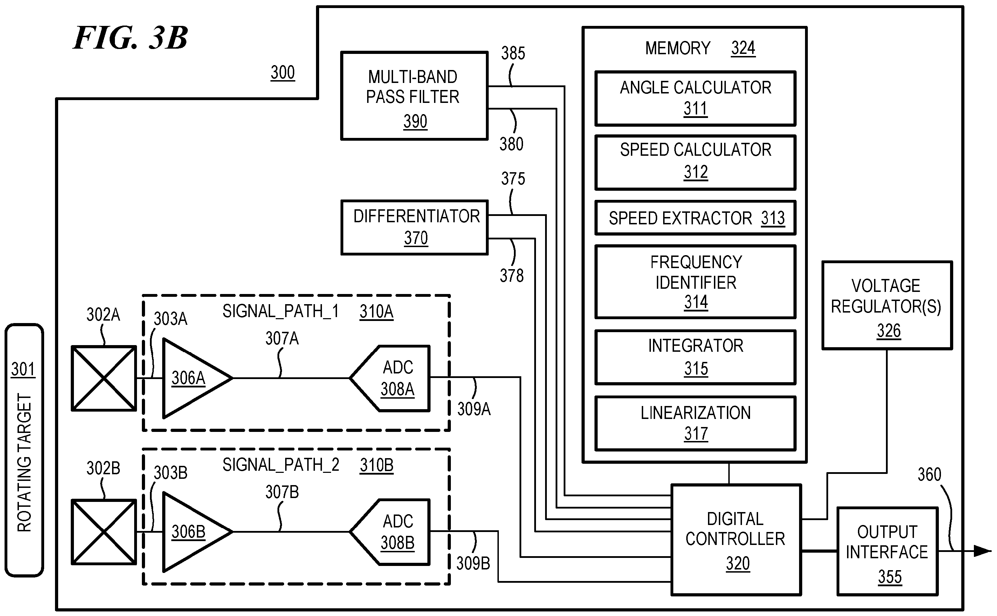

One or more magnetic field sensing elements (see, e.g., magnetic field sensing elements 302A, 302B of FIGs. 3A, 3B) for sensing a magnetic field of a magnet may be positioned near the magnet. In example system 100 of FIG. 1A, for example, a package 133 (e.g., integrated circuit) including one or more magnetic field sensing elements is positioned near magnet 115. System 100 of FIG. 1A is an example of an on-axis arrangement, in that the one or more magnetic field sensing elements in package 133 are aligned along the rotation axis (e.g., axis 110) of the target (e.g., magnet 115). Package 133 may be positioned near magnet 115 by package 133 being positioned on a surface 145, such as a printed circuit board (PCB) or other surface, near magnet 115.

In example system 150 of FIG. 1B, a package 175 (e.g., integrated circuit) is positioned near magnet 165. Package 175 may include one or more magnetic field sensing elements for sensing the magnetic field of magnet 165. System 150 of FIG. 1B is an example of an off-axis arrangement, in that the one or more magnetic field sensing elements in package 175 are aligned off the rotation axis (e.g., axis 160) of the target (e.g., magnet 165). Package 175 may be positioned near magnet 165 by mounting package 175 on a surface 195, such as a PCB or other surface, near magnet 165. In addition to including one or more magnetic field sensing elements, a package (e.g., package 133 of FIG. 1A, package 175 of FIG. 1B) may also include additional circuitry (see, e.g., FIGs. 3A, 3B) for conditioning and/or processing signals representing the magnetic field generated by the one or more magnetic field sensing elements. Although FIGs. 1A and 1B illustrate the one or more magnetic field sensing elements and additional circuitry as being included in a package, the disclosure is not so limited. A person of ordinary skill in the art would recognize, for example, that the one or more magnetic field sensing elements and any additional circuitry may be mounted as separate components on a PCB, for example. Alternatively, some components may be included in a package, while other components may be external to the package.

In some embodiments, the one or more magnetic field sensing elements may include at least two magnetic field sensing elements, positioned orthogonally to each other, each sensitive to an axis of a magnetic field. For example, if system 100 of FIG. 1A were mapped to X, Y, and Z axes in a Cartesian coordinate system, axis 135 may be thought of as an X axis, axis 138 may be thought of as a Y axis, and axis 110 may be thought of as a Z axis. In some embodiments, two magnetic field sensing elements may be used to measure an angle of rotation of a target, with one of the magnetic field sensing elements sensitive to the magnetic field along one of the X and Y axes, and the other magnetic field sensing element sensitive to the magnetic field along the other of the X and Y axes. For example, FIG. 1A illustrates that one magnetic field sensing element in package 133 may be sensitive to a magnetic field along one axis 135 (e.g., X axis) and that another magnetic field sensing element in package 133 may be sensitive to the magnetic field along an axis 138 (e.g., Y axis) that is orthogonal to axis 135. Similarly, FIG. 1B illustrates that one magnetic field sensing element in package 175 may be sensitive to a magnetic field along one axis 180 (e.g., X axis) and that another magnetic field sensing element in package 175 may be sensitive to the magnetic field along an axis 185 (e.g., Y axis) that is orthogonal to axis 180. The output of the magnetic field sensing elements may be processed and/or conditioned and sent to one or more controllers of the integrated circuit. The processed signals received by the controller(s) may be referred to as channels, with one channel corresponding to the processed and/or conditioned signal output from one of the magnetic field sensing elements, and the other channel corresponding to the processed and/or conditioned signal output from another of the magnetic field sensing elements.

In response to the magnetic field generated by the target (e.g., magnet 115, magnet 165), the magnetic field sensing elements may each provide a voltage output that is proportional to the magnitude of the sensed magnetic field. The voltage output may vary as the target rotates due to changes in the magnetic field of the target detected by the magnetic field sensing elements. When the magnetic field is sensed over a rotation of 360 degrees, the voltage output from one of the magnetic field sensing elements may appear as a sine function over the 360 degrees and the voltage output from the other of the magnetic field sensing elements may appear as a cosine function over the 360 degrees. In the example shown in FIG. 1A, there is only one pole pair for an entire 360 degree rotation of the rotation object, so a period of the sine function and cosine function may correspond to a complete 360 degree rotation of the rotation object. However, as discussed above, the disclosure is not so limited and a target may have multiple pole pairs, in which case a rotation of each one of the multiple pole pairs may correspond to a measured 360 degrees of rotation of the target, and a period of the sine function and a period of the cosine function may correspond to a rotation of one of the multiple pole pairs.

An inverse tangent function (i.e., arctan function) may be applied to the voltages measured from the magnetic field sensing elements at any given time to calculate an angle of rotation of the target at that time. For example, the two-argument arctangent function atan2, commonly used in computing and mathematics, may be used to calculate a rotation angle of the target based on the voltage output signals from the two orthogonal magnetic field sensing elements at a given time. Various other techniques may be used to determine a measured rotation angle of the target instead of using an inverse tangent function, such as by using a lookup table, a polynomial fit, or a coordinate rotation digital computer (CORDIC) calculation. The calculations and/or processing required to determine the measured angle may be carried out by one or more controllers in the sensor device. That is, one or more controllers inside the package may receive signals from the two channels and determine a measured angle of rotation of the target based on the two channel signals using an inverse tangent function, lookup table, polynomial fit, or CORDIC calculation.

Design of an angle measurement system may depend on the needs of a particular application. Factors such as arrangement (e.g., off-axis or on-axis), desired air gap, desired accuracy, and anticipated temperature range, among other factors, may be taken into account in designing such a system. A magnetic field angle measurement system may have two main sources of error, sensor device related errors and magnetic input related errors. Sensor device related errors may include, for example, intrinsic nonlinearity of the sensor device (e.g. sensor device inaccuracy, drift), parametric temperature drift, and/or noise. Magnetic input related errors may include, for example, magnetic field strength variation and magnetic field nonlinearity. These errors may result, for example, from magnet misalignment, magnet imperfections, or presence of other magnetic materials, among other factors. A magnetic field angle sensor device may be tested and calibrated during production using a homogeneous magnetic field in order to reduce intrinsic nonlinearities and temperature drift to a minimum. However, when using a magnetized target, the magnetic field input to the magnetic field sensing elements of the sensor device may not be homogeneous over the entire range of rotation, and may have inherent errors. These errors may cause angle measurement errors in the system. Angle measurement error may also be caused by amplitude/gain mismatch between the channels. For example, differences in the magnetic sensing elements, or in the circuitry that processes the different magnetic sensing elements, may cause the peak voltages output from the two channels to be different, causing errors in the angles measured based on the two channels. Angle measurement error may also be caused by offset errors. For example, a sensor device may be designed to have an offset voltage set to a certain value (e.g., supply voltage divided by two). Any deviation from this offset voltage in either channel may cause errors in angle measurements. Still another source of angle measurement error may be non-orthogonality of the two magnetic field sensing elements. For example, the two magnetic field sensing elements may not be placed perfectly orthogonal to one another (e.g., in the package) due to certain imprecisions in manufacturing, for example. Yet another potential source of angle measurement error is misplacement of the sensor device. For example, misplacement of a sensor device in a system, even if slight, may cause errors in angle measurement. As a result of one or more of the above possible sources of error, the rotation angle of a target measured by the sensor device may not be identical to the actual rotation angle of the target at any given point in time. These differences between the measured rotation angle and the actual rotation angle are angle measurement errors, and may be referred to as nonlinearities.

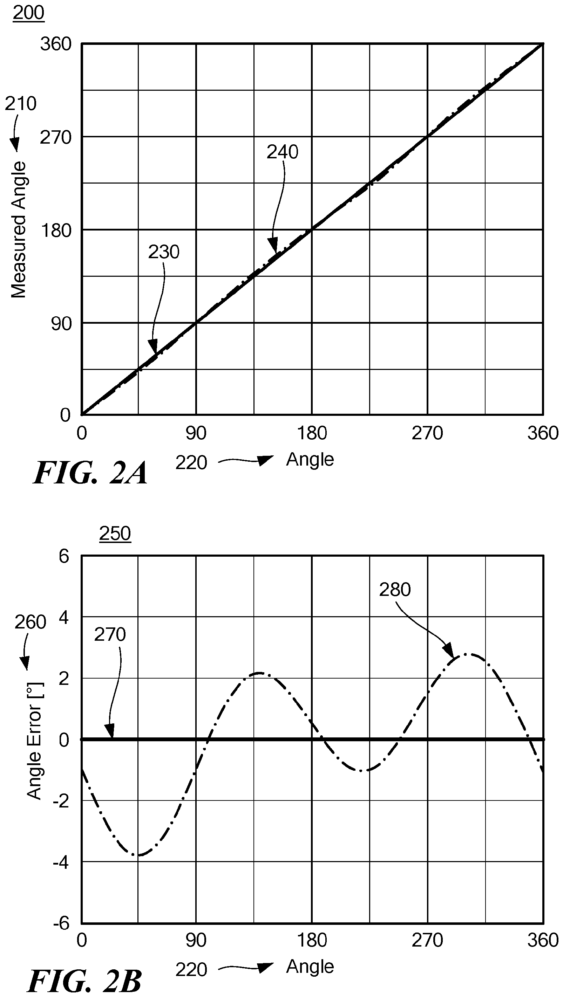

For example, FIG. 2A shows a graph 200 having an X-axis 220 that represents an actual angle of rotation of a target. Y-axis 210 of graph 200 represents a measured angle of rotation of the target. Plot 230 represents ideal measurements of rotation angles of the target over 360 degrees of rotation. Plot 240 represents measurements of rotation angles of the target over 360 degrees of rotation by an example sensor device. FIG. 2B shows a graph 250 having an X-axis 220 that represents an actual angle of rotation of a target. Y-axis 260 of graph 250 represents angle error between a measured angle of rotation of the target and the actual angle of rotation of the target. Plot 270 represents ideal measurements of rotation angles of the target over 360 degrees of rotation. Plot 280 represents measurements of rotation angles of the target over 360 degrees of rotation determined by an example sensor device. In the example shown in FIG.

2B, the rotation angle measured by the magnetic sensor device may be almost 4 degrees off from the actual rotation angle of the target at around 45 degrees of rotation, approximately 2 degrees off from the actual rotation angle of the target at around 135 degrees of rotation, and approximately 3 degrees off from the actual rotation angle of the target at around 290 degrees of rotation, as just some examples.

One conventional approach used to mitigate these errors is to perform an initial calibration after the sensor device has been installed in a system to determine measured angle errors and to then use those angle errors to linearize the sensor device. For example, after the sensor device has been installed in a system, the target to be measured may be rotated 360 degrees and the sensor device may measure angles around the 360 degrees of rotation. Angle measurements around the 360 degrees of rotation may also be recorded by an accurate, high-resolution encoder device. The angle measurements recorded by the sensor device may then be compared with the angle measurements recorded by the encoder device, and differences between the two measurements may be recorded as angle error values over the 360 degrees of rotation. These angle error values may then be stored and used to adjust future angle measurements recorded by the sensor device to compensate for errors. The process of determining these angle error values and using them to compensate for angle measurement errors may be referred to as linearizing the sensor device.

Once these angle error values have been obtained, different approaches may be used to linearize rotation angles measured by a sensor device. One approach may be to store angle error values for different measured rotation angle values along the 360 degrees of rotation in a lookup table of a sensor device, and to continuously apply these angle error values to measured rotation angle values to correct for the angle errors of the system. For example, if during calibration a rotation angle of the target measured by the sensor device is 5 degrees less than an actual rotation angle of the target, then when this rotation angle is measured in the future by the sensor device, the sensor device may add 5 degrees to the measurement to compensate for the error.

Another approach to linearizing the sensor device may be to use the angle error values to calculate linear correction functions over different ranges of measured rotation angles along 360 degrees of rotation, and to piecewise apply the linear functions to measured rotation angles in the different angle ranges to compensate for the angle errors of the system.

A third approach to linearizing the sensor device may be to use the angle error values to calculate harmonic functions that approximate the angle errors and to apply the harmonic functions to compensate for the errors. For example, because the target rotates over 360 degrees, the magnetic field it generates, and many of the associated factors causing angle measurement errors, may be periodic (e.g., the angle error function graphed in FIG. 2B may generally repeat every 360 degrees of rotation). As a result, one or more harmonic functions may be determined and used to approximate the angle errors.

All three of these approaches rely on an initial calibration step where rotation angle values of a target are measured by a sensor device over 360 degrees of rotation, and where these measured rotation angles are compared with actual rotation angle values of the target over the 360 degrees of rotation to determine angle errors over the 360 degrees of rotation. However, it may be beneficial to provide sensor devices that can self-linearize, such that actual rotation angles of a target do not need to be known. It may also be beneficial to provide sensor devices that can continue to determine angle errors and to linearize rotation angle measurements as the sensor device operates, such that the sensor device can compensate for angle errors that develop in the system over time.

Embodiments of the present disclosure provide systems, methods, and techniques for linearizing a sensor device, such that actual rotation angles of a target do not need to be known. That is, embodiments of the present disclosure provide systems, methods, and techniques for providing a sensor device that can self-linearize its rotation angle measurements. Embodiments of the present disclosure also provide systems, methods, and techniques for providing a sensor device that can continue to determine angle errors and to linearize rotation angle measurements as the sensor device operates. For example, embodiments of the present disclosure provide systems, methods, and techniques that may linearize sensor device measurements at any time during operation, such as continuously, or upon demand of a user or system.

Example systems, methods, and techniques disclosed herein provide for a sensor device that can self-linearize its rotation angle measurements by differentiating rotation angle measurements taken by a sensor device over time to obtain a speed signal. Speed values per rotation angle measurement may then be extracted for some number of degrees of rotation, such as for 360 degrees of rotation, some number of degrees of rotation greater than 360 degrees, or some multiple of 360 degrees of rotation. Because many of the nonlinearities discussed above will be periodic, harmonic signals of the extracted speeds may then be determined to identify major contributors to the angle error. These harmonic signals may then be integrated to determine angle error versus time (and associated measured rotation angle). The angle error values may then be used to linearize rotation angle measurements of the sensor device at those measured rotation angles in the future. An advantage of this approach is that actual rotation angles of the target do not need to be known to linearize the sensor device measurements. That is, the sensor device self-linearizes the rotation angle measurements. Moreover, the sensor device may continue to perform this approach over time, such as continuously, periodically, or on demand, thereby allowing the sensor device to compensate for any new nonlinearities that develop in the system over time (e.g., due to temperature changes, drift, wear and tear, etc.).

FIGs. 3A, 3B are block diagrams of a sensor device 300, consistent with embodiments of the present disclosure, wherein like reference numbers indicate like elements. For example, sensor device 300 may be a magnetic field angle sensor device configured to sense the magnetic field of a target and to use the sensed magnetic field to determine a measured rotation angle of the target. This target is illustrated in FIGs. 3A and 3B as rotating target 301. As previously discussed, rotating target 301 may be a magnet attached to a rotating object that may rotate with the rotating object, or alternatively may be a rotating object that is itself magnetized.

As discussed above, sensor device 300 may include one or more magnetic field sensing elements. For example, FIGs. 3A and 3B illustrate sensor device 300 as comprising two magnetic field sensing elements, magnetic field sensing element 302A and magnetic field sensing element 302B. As discussed above, the magnetic field sensing elements may be positioned orthogonal to each other, so as to be sensitive to orthogonal aspects of a magnetic field. A magnetic field sensing element may be any type of element sensitive to a magnetic field. For example, a magnetic field sensing element may be a Hall-effect element, a magnetoresistance element, or a magnetotransistor element. For example, a magnetic field sensing element may be a Hall-effect element such as a planar Hall element, a vertical Hall element, or a circular vertical Hall (CVH) element. A magnetic field sensing element may instead be a magnetoresistance element, such as an Indium Antimonide (InSb) element, a giant magnetoresistance (GMR) element (e.g., a spin valve element), an anisotropic magnetoresistance (AMR) element, a tunneling magnetoresistance (TMR) element, or a magnetic tunnel junction (MTJ) element. A magnetic field sensing element may be a receiving coil field sensing element. A magnetic field sensing element may be a single element, or alternatively may include two or more magnetic field sensing elements arranged in one of various configurations, such as a half bridge or full (Wheatstone) bridge. Depending on the type of sensor device and application requirements, a magnetic field sensing element may be a device made of a type IV semiconductor material such as Silicon (Si) or Germanium (Ge), or of a type III-V semiconductor material such as Gallium-Arsenide (GaAs) or an Indium compound such as Indium-Antimonide (InSb). In some embodiments, multiple magnetic field sensing elements in a sensor device may be of the same type of magnetic field sensing element. For example, sensor device 300 may include two magnetic field sensing elements 302A and 302B, which may be of the same type (e.g., from the list above) and positioned orthogonal to one another. In some embodiments, there may be different types of magnetic field sensing elements that work together in a sensor device. For example, sensor device 300 may include two magnetic field sensing elements 302A and 302B, which may be of different types (e.g., from the list above).

In some embodiments, magnetic field sensing elements 302A, 302B may experience a change in resistance in response to a nearby magnetic field. For example, a magnetic field generated by rotating target 301 may cause a change in resistance in magnetic field sensing elements 302A, 302B. A voltage may then be detected across magnetic field sensing elements 302A, 302B by passing a current through the elements. The detected voltage may be proportional to the resistance of a magnetic field sensing element and may therefore be representative of the magnetic field that induced the resistance within the magnetic field sensing element. As previously discussed above, by placing the magnetic field sensing elements orthogonal to each other, a measured rotation angle of the target (e.g., target 301) may be determined based on the voltages generated by the two magnetic field sensing elements at any given time (e.g., using an inverse tangent function (arctan), two-argument arctangent function atan2, lookup table, polynomial fit, CORDIC calculation).

The voltages sensed at the magnetic field sensing elements (e.g., magnetic field sensing elements 302A and 302B) may be processed and/or conditioned along signal paths (e.g., Signal_Path_1 310A, Signal_Path_2 310B) before being sent to a controller (e.g., digital controller 320). A signal path for processing/conditioning a detected voltage may include, for example, an amplifier and an analog-to-digital converter. For example, FIG. 3A illustrates Signal_Path_1 310A as including an amplifier 306A that receives a detected voltage signal (e.g., signal 303A) from magnetic field sensing element 302A. An amplified version of the voltage signal (e.g., signal 307A) may then be sent to analog-to-digital converter 308A. Analog-to-digital converter 308A may then convert the analog voltage signal to a digital signal (e.g., signal 309A) and send the digital signal to digital controller 320. Similarly, FIG. 3A illustrates Signal_Path_2 310B as including an amplifier 306B that receives a detected voltage signal (e.g., signal 303B) from magnetic field sensing element 302B. An amplified version of the voltage signal (e.g., signal 307B) may then be sent to analog-to-digital converter 308B. Analog-to-digital converter 308B may then convert the analog voltage signal to a digital signal (e.g., signal 309B) and send the digital signal to digital controller 320.

As discussed above, a sensor device may also include one or more controllers. The controller(s) may include digital and/or analog circuitry. For example, sensor device 300 of FIGs. 3A and 3B includes a digital controller 320. The controller may include any suitable type of processing circuitry, such as an application-specific integrated circuit (ASIC), a CORDIC processor, a special-purpose processor, synchronous digital logic, asynchronous digital logic, a general-purpose processor (e.g., MIPS processor, x86 processor), etc. The one or more controllers may also include a clock. The clock may timestamp when voltages used to calculate angle measurements were recorded (e.g., timestamp with an elapsed amount of time measured by the clock), such that determined angle measurements and the times at which the voltages used to calculate the angle measurements were received may be stored in memory (e.g., memory 324). One of skill in the art would recognize that the clock need not be internal to the one or more controllers, and may instead by an external component connected to the one or more controllers.

The sensor device may also include one or more memories. For example, sensor device 300 of FIGs. 3A and 3B includes a memory 324. The memory may include any suitable type of volatile and/or non-volatile memory. In some embodiments, the memory may be a non-transitory computer-readable medium. By way of example, memory 324 may include a random-access memory (RAM), a dynamic random-access memory (DRAM), an electrically-erasable programmable read-only memory (EEPROM), and/or any other suitable type of memory. The memory may store instructions, that when executed by the controller(s), cause the controller(s) to carry out certain determinations, steps, processes, and/or calculations. For example, FIG. 3A illustrates memory 324 as storing instructions that, when executed by the controller, cause the controller(s) to (1) calculate angles (e.g., angle calculator instructions 311), (2) calculate speeds (e.g., speed calculator instructions 312), (3) extract speeds (e.g., speed extractor instructions 313), (4) identify harmonics signals of certain frequencies (e.g., frequency identifier instructions 314), (5) integrate a signal (e.g., integrator instructions 315), and (6) linearize angle measurements (e.g., linearization instructions 317). These instructions will be discussed in further detail herein.

The sensor device may include one or more voltage regulators. For example, sensor 300 of FIGs. 3A and 3B includes voltage regulator(s) 326. Voltage regulator(s) may, for example, convert or regulate voltage to provide a stable power supply to the controller(s) (e.g., digital controller 320), magnetic field sensing element(s) (e.g., magnetic field sensing elements 302A, 302B), amplifier(s) (e.g., amplifier(s) 306A, 306B), analog-to-digital converter(s) (e.g., analog-to-digital converters 308A, 308B), one or more memories (e.g., memory 324), output interface (e.g., output interface 355), and/or any other circuitry (e.g., differentiator circuitry 370, multi-band pass filter 390).

The sensor device may also include one or more output interfaces. For example, sensor device 300 includes an output interface 355. An output interface may include any suitable type of interface for outputting an output signal (e.g., output signal 360). The output interface(s) may include one or more of a wired or wireless interface. By way of example, the output interface(s) may include a current generator, an Inter-Integrated Circuit ($I_2C$) interface, a Controller Area Network (CAN) bus interface, a WiFi interface, an Ethernet interface, a Universal Serial Bus (USB) interface, a local area network (LAN) interface, a cellular (e.g., 5G) interface, and/or any other suitable type of interface.

The sensor device may include additional circuitry. For example, FIG. 3B illustrates sensor 300 as including optional differentiator circuitry 370. The differentiator circuitry may output an approximation of a differentiation of the rotation angle determined by the one or more controllers (e.g., digital controller(s) 120). For example, the controller(s) may output a signal 375 (e.g., voltage signal) representative of the calculated rotation angle at a given time to differentiator circuitry 370 and may receive a signal 378 (e.g., voltage signal) representative of a differentiation of the calculated rotation angle (i.e., representative of rotation speed) from the differentiator circuitry. In some embodiments, the controller(s) may continuously output a signal 375 representative of rotation angle to differentiator circuitry 370 as the rotation angles are calculated, and may continuously receive a signal 378 from the differentiator circuitry representative of rotation speed based on signal 375 input to differentiator circuitry 370. Signal 378 may then be used by the controller(s) as a measured speed of rotation at a given time, as further discussed herein.

FIG. 3B also illustrates sensor 300 as including optional multi-band pass filter 390. The one or more controllers of the sensor device may send determined speeds to multi-band pass filter 390 (e.g., over signal line 380). Multi-band pass filter 390 may then filter harmonic signals from the determined speeds and send the filtered signals back to the one or more controllers (e.g., over signal line 385). In some embodiments, multi-band pass filter 390 may be constructed as a circuit. For example, a person of skill in the art would recognize that a variety of different techniques may be used to construct a circuit that filters certain harmonics from a signal. These known techniques should be considered to be within the scope of the disclosure herein. Alternatively, multi-band pass filter functionality may be implemented in software. For example, frequency identifier instructions 313 may be executed by the controller(s) to identify harmonics of the determined speeds. A person of skill in the art would recognize that there are known techniques for identifying harmonic signals from a signal in software. Those known techniques should be considered to be within the scope of the disclosure herein.

Although not shown in FIG. 3B, additional circuitry (e.g., amplifiers, digital-to-analog converters, analog-to-digital converters) may be placed between the controller (e.g., digital controller 320) and differentiator circuitry 370 along signal line 375 and/or 378. Further, although not shown in FIG. 3B, additional circuitry (e.g., amplifiers, digital-to-analog converters, analog-to-digital converters) may be placed between the controller and multi-band pass filter 390 along signal line 380 and/or 385. The additional circuitry may, for example, perform some preprocessing to condition a signal from the controller for use by differentiator 370 and/or multi-band pass filter 390, or may perform some preprocessing to condition a signal from differentiator 370 and/or multi-band pass filter 390 for use by the controller.

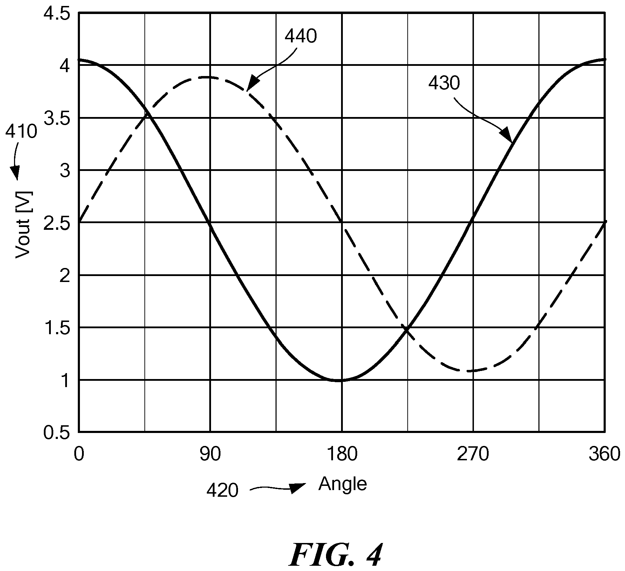

FIG. 4 is an example graph 400 of voltage signals received from two channels representative of a magnetic field of a rotating target. Y-axis 410 represents output in volts and x-axis 420 represents measured rotation angle in degrees as determined by a controller of a sensor device. Graph 400 illustrates a plot 440 output from one channel (e.g., channel 1) and a plot 430 output from another channel (e.g., channel 2). For example, channel 1 may represent signal 309A received by digital controller 320 from magnetic field sensing element 302A after the output from magnetic field sensing element 302A has been processed/conditioned (e.g., amplified by amplifier 306A and converted to digital by analog-to-digital converter 308A). Channel 2 may represent signal 309B received by digital controller 320 from magnetic field sensing element 302B after the output from magnetic field sensing element 302B has been processed/conditioned (e.g., amplified by amplifier 306B and converted to digital by analog-to-digital converter 308B). As previously discussed, magnetic field sensing elements (e.g., magnetic field sensing element 302A and magnetic field sensing element 302B) may be positioned orthogonal to each other, each sensitive to an axis of the magnetic field generated by a rotating target (e.g., rotating target 301). As a result, the measured voltages received from one channel over 360 degrees of rotation of the target may represent a sine function (e.g., signal 440), and the measured voltages received from the other channel over the 360 degrees of rotation of the target may represent a cosine function (e.g., signal 430), as shown in FIG. 4. The controller(s) may then determine the measured angle corresponding to the two voltages received from the two channels at a given time by, for example, applying to the two voltages an inverse tangent function (i.e., arctan function), atan2 function (e.g., atan2(Ch 1, Ch 2)), lookup table, polynomial fit, or CORDIC calculation.

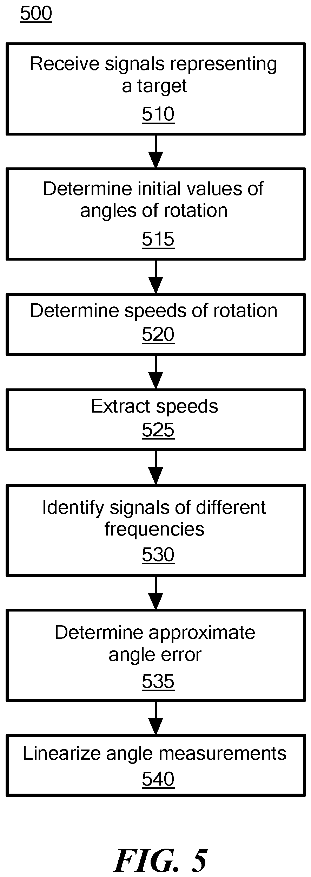

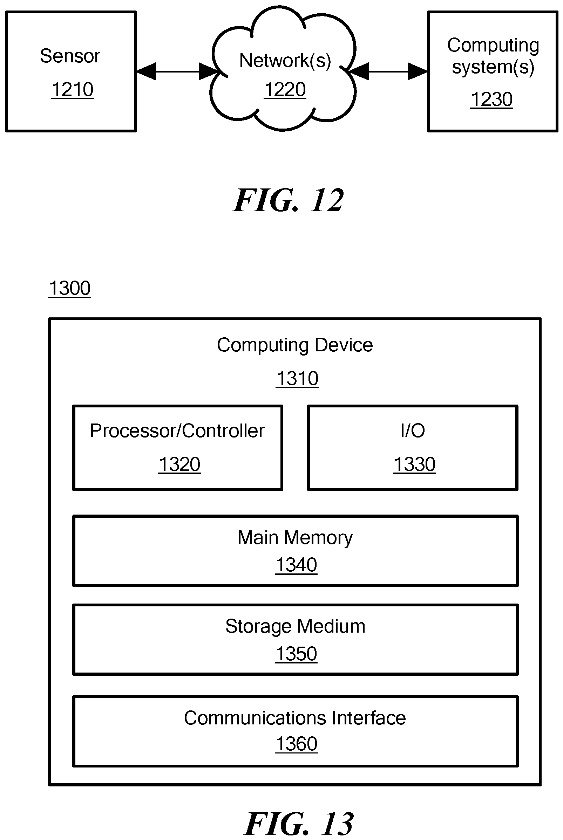

FIG. 5 shows a flow diagram of an example process 500 for linearizing angle sensor device measurements. Example process 500 may be implemented by one or more controllers (e.g., digital controller 320) of a sensor device (e.g., sensor device 300), or by one or more computing systems (e.g., computing system(s) 1230 of FIG. 12). In some embodiments, part of process 500 may be performed by a sensor device and part of process 500 may be performed by one or more computing systems. Using example process 500, controller(s) may linearize rotation angle measurements of a target, without requiring knowledge of the actual rotation angles of the target. That is, a controller may self-linearize angle measurements using example process 500. Example process 500 may also be used to linearize rotation angle sensor device measurements at any time during operation, such as continuously, periodically, or upon demand of a user or system.

In 510, signals representing a target may be received. For example, signals representing a magnetic field of a magnetic target (e.g., a magnet attached to a rotation object or a magnetized rotation object) may be received by one or more controllers. In some embodiments, as discussed above, signals representing a magnetic field of a target may be received over two different channels. For example, as discussed with respect to FIGs. 3A and 3B, signals may be received over two channels, each channel providing a signal from a different magnetic field sensing element (e.g., magnetic field sensing element 302A, magnetic field sensing element 302B). As further discussed with respect to FIGs. 3A and 3B, the signals from the magnetic field sensing elements may be further processed and/or conditioned along signal paths (e.g., Signal_Path_1 310A, Signal_Path_2 310B) before being provided to a controller. For example, a signal (e.g., voltage signal) output from a magnetic field sensing element (e.g., magnetic field sensing element 302A) may be output (e.g., output 303A) to one or more amplifiers (e.g., amplifier 306A). An amplified version of the signal may then be output (e.g., output 307A) to one or more analog-to-digital converters (e.g., analog-to-digital converter 308A). A digital version of the signal may then be output (e.g., output 309A) to one or more controllers (e.g., digital controller 320), and the one or more controllers may receive this signal (e.g., signal 309A) of one channel. Similarly, a signal (e.g., voltage signal) output from a magnetic field sensing element (e.g., magnetic field sensing element 302B) may be output (e.g., output 303B) to one or more amplifiers (e.g., amplifier 306B). An amplified version of this signal may then be output (e.g., output 307B) to one or more analog-to-digital converters (e.g., analog-to-digital converter 308B). A digital version of this signal may then be output (e.g., output 309B) to the one or more controllers (e.g., digital controller 320), and the one or more controllers may receive this signal (e.g., signal 309B) of another channel. As previously discussed, the magnetic field sensing elements may be positioned orthogonal to each other, such that the voltage output of one of the magnetic field sensing elements is a sine wave over 360 degrees of rotation of the target and such that the voltage output of the other of the magnetic field sensing elements is a cosine wave over 360 degrees of rotation of the target.

In 515, initial values of angles of rotation of the target may be determined. For example, as discussed above, voltages output from two channels representative of the magnetic field of a target may be received by one or more controllers (e.g., controller(s) 320). As previously discussed, the controller(s) may then determine the measured angle corresponding to the two voltages received from the two channels by, for example, applying the two voltages in an inverse tangent function (i.e., arctan function), atan2 function (e.g., atan2(Ch 1, Ch 2)), lookup table, polynomial fit, or CORDIC calculation. The measured angle may be stored, along with a time at which the voltages were received by the controller(s) (e.g., as determined by a clock within sensor device 300, as previously described). 510 and 515 may repeat continuously, or for a predetermined amount of time. That is, multiple rotation angle measurements for a target and times at which the voltages corresponding to the angle measurements were received, may be recorded. In some embodiments, voltages may be recorded at times that are periodic, such as once every millisecond, and angle measurements then determined for these times. 515 may be implemented based on instructions stored in memory (e.g., memory 324) and executed by one or more controllers (e.g., digital controller 320) of a sensor device (e.g., sensor device 300). For example, the instructions for carrying out 515 may be recorded as angle calculator instructions 311 in memory 324.

In 520, one or more speeds of rotation of the target may be determined. For example, one or more controllers (e.g., digital controller 320) may execute instructions (e.g., speed calculator instructions 312) to determine speeds of rotation of the target over time. The speeds may be determined, for example, by differentiating (e.g., taking the derivative) of the rotation angle measurements over time. One example way of performing this differentiation is to use numerical differentiation. That is, the one or more controllers may execute instructions that numerically differentiate the rotation angle measurements of the target over time to determine rotation speed of the target per time (and corresponding rotation angle measurement). For example, a simple two-point estimation calculation may be used to estimate the rotation speed of a target at the times at which two rotation angle measurements were recorded. A rotation angle measured at one time may be subtracted from a rotation angle measured at a second time, and the difference between the two may be divided over the difference between the two times, thereby providing the value of a slope of a line between the two angle measurements and an approximation of a derivative of the angle measurements over the two times. That is, the following equation may be used:

Equation 1:

$$approximate\ derivative\ t1\_t2 = \frac{Rotation\ angle\ at\ time\ 2 - Rotation\ angle\ at\ time\ 1}{time\ 2 - time\ 1}$$

This equation may be used on angle measurements recorded at every set of adjacent times over which a target rotated. For example, the same equation may be used on the angle measurements recorded at the next set of times:

Equation 2:

$$approximate\ derivative\ t2\_t3 = \frac{Rotation\ angle\ at\ time\ 3 - Rotation\ angle\ at\ time\ 2}{time\ 3 - time\ 2}$$

The average of the results of equation 1 and 2 may then be used to approximate the speed of the target (i.e., derivative of the angle measurement) at time 2 (and its associated measured rotation angle). Approximate speeds may likewise be determined for all times (and associated measured rotations angles) at which an angle was measured for all 360 degrees of rotation of the target.

Alternatively, if angle measurements are recorded at a regular period (e.g., once every millisecond), sets of two angle measurements including every other angle measurement (e.g., angle measurements at times 1 and 3 in one set, angle measurements at times 2 and 4 in another set, angle measurements at times 3 and 5 in another set, etc.) may be used to calculate approximate speed at a given time (and associated measured rotation angle) between the two times in the set. For example, the following equation may be used:

Equation 3: $approximate\ derivative\ t2 = \dfrac{Rotation\ angle\ at\ time\ 3 - Rotation\ angle\ at\ time\ 1}{2*(time\ 3 - time\ 2)}$

The result of equation 3 may be used as an approximation of the rotation speed of the target at time 2 (and its associated measured rotation angle).

Although two example ways of calculating the approximate rotation speed of a target (and associated measured rotation angle) at a given time using numerical differentiation are provided above, the disclosure is not so limited. A person of ordinary skill in the art would recognize that there are many ways of performing numerical differentiation, and that the one or more controllers in a sensor device 300 may perform any of the known techniques to approximate rotation speed of the target based on recorded angle measurements and time, as disclosed herein.

In some embodiments, the one or more speeds of rotation of the target may be determined by differentiator circuitry 370. That is a signal 375 (e.g., voltage signal) representative of the rotation angle determined by the controller may be output to differentiator circuitry 370. Differentiator circuitry 370 may then be used to differentiate the signal over time and output a signal 378 representative of speed back to the controller. That is, through use of differentiator circuitry 370, a sensor device may determine speed without the controller having to perform a differentiation (e.g., numerical differentiation) calculation, such as discussed above. 510, 515, and 520 may be repeated such that rotation speeds are determined and recorded along with corresponding timestamps (e.g., from clock) and/or rotation angle measurements.

In 525, recorded speeds over a certain span of measured rotation angles may be extracted from the recorded speeds. For example, one or more controllers (e.g., digital controller 320) may execute instructions (e.g., filter 313) stored in memory (e.g., memory 324) for extracting the recorded rotation speeds. In some embodiments, only the recorded rotation speeds corresponding to two full rotations (720 degrees of rotation) of the target may be filtered out. In other embodiments, only the recorded speeds corresponding to a single full rotation (360 degrees of rotation) of the target may be filtered out. However, the disclosure is not limited to either of these example embodiments. Recorded speeds over any span of measured rotation angles that is greater than or equal to 360 degrees may be extracted. The extracted speeds may be interpreted by the one or more controllers as a signal that is a function of the measured rotation angle of the target and that is periodic at one full rotation (e.g., 360 degrees) of the target. The extracted speeds may be extracted and interpreted as a signal on which a harmonic analysis is to be performed (see, e.g., 530 below). In some embodiments, all the recorded speeds may be used in a harmonic analysis (see, e.g., 530), such that no extraction of a set of the recorded speeds is performed.

In 530, harmonic signals may be identified from the speed signal. For example, one or more controllers (e.g., digital controller 320) may execute instructions (e.g., frequency identifier instructions 314) stored in memory (e.g., memory 324) to identify the harmonic signals. As discussed previously, certain nonlinearities in an angle measurement system may be periodic (e.g., occurring at least once every 360 degrees). Rotation speed corresponds to the rate of change of the measured rotation angle, and so these same nonlinearities may appear in the filtered rotation speeds when viewed as a function of measured rotation angle. These nonlinearities may be approximated by extracting harmonic signals from the speed signal, and then integrating these harmonic signals. The integration of these harmonic signals may provide an approximation of the measured rotation angle error at every measured rotation angle. Extracting a greater number of harmonic signals from the speed signal may provide a better approximation of the angle measurement error. However, the first few harmonic signals may generally be the greatest contributors to the angle measurement error. As a result, the first, second, and third harmonic signals may be extracted, for example, thereby providing a good approximation of the nonlinearities without requiring too much processing power by the one or more controllers. For example, a first harmonic signal may have one period over 360 degrees of rotation, a second harmonic signal may have two periods over 360 degrees of rotation, and a third harmonic signal may have four periods over 360 degrees of rotation. In some embodiments, no more than the first, second, and third harmonic signals may be extracted. That is, a harmonic signal with eight periods over 360 degrees of rotation may not be extracted. Of course with more processing power more harmonic signals may be extracted, yielding even greater accuracy in the approximation of the measured angle error, so the disclosure is not limited to extracting any particular number of harmonic signals. In some embodiments, the one or more controllers may extract the harmonic signals by calculating a Fourier Transform, such as a Fast Fourier Transform (FFT), of the speed signal. A Fourier Transform calculation may transform the measured speeds in the speed signal from their representation as measured speed as a function of measured angle to a representation of measured speeds in the frequency domain. For example, a Discrete Fourier Transform (DFT) could be used to transform the measured speeds to the frequency domain using the following equation:

$$\text{Equation 4:} \qquad dft(speed) = \sum_{n=0}^{N-1} Re_{speed(n)} + i \times Im_{speed(n)}$$

where:

N = number of recorded samples of speed,
$Re_{speed(n)}$ = The real portion of the output series for recorded sample n, and
$Im_{speed(n)}$ = The imaginary portion of the output series for recorded sample n.

However, as is known, computing a DFT directly may be too slow to be practical. By contrast, a FFT algorithm may rapidly convert a signal to the frequency domain by factorizing the DFT matrix into a product of sparse factors, thereby reducing the complexity of computing the DFT and rapidly increasing the speed at which such a calculation may be performed. A person of ordinary skill in the art would recognize that FFTs are widely used in applications, and that there are many known FFT algorithms. A person of ordinary skill would recognize that known FFT algorithms may be used to transform measured speeds to the frequency domain here, and use of any of the known FFT algorithms should be considered to be within the scope of the disclosure herein. The extracted harmonic signals may be periodic over 360 degrees and may each be represented by a phase and amplitude of the harmonic signal.

Although the above describes extracting harmonic signals by calculating a FFT of the speed signal, the disclosure is not so limited. A person of ordinary skill in the art would recognize that there are many ways of extracting harmonic signals from a signal, all of which should be considered to be within the scope of the disclosure herein. As one example, a multi-band pass filter (see, e.g., multi-band pass filter 390 of sensor 300 in FIG. 3B) may be used to extract the harmonic signals. For example, the controller may send a signal 380 representing the recorded speed values to a multi-band pass filter 390, and may receive a signal 385 from multi-band pass filter 390 that includes the filtered harmonic signals. A person of ordinary skill would recognize there are known multi-band pass circuit techniques for extracting harmonic signals, and any of those known techniques should be considered to be within the scope of the disclosure herein. As another example, a multi-band pass filter may be implemented by controller executing software (e.g., frequency extractor instructions 313). A person of ordinary skill would recognize that there are known techniques for extracting frequencies using a multi-band filter in software, and any of those known techniques should be considered to be within the scope of the disclosure herein.

In 535, angle error at measured rotation angles of the target may be determined. For example, an integration of the extracted harmonic signals (e.g., first harmonic, second harmonic, third harmonic of the speed signal) may be performed to obtain an approximation of the angle error per measured rotation angle. For example, one or more controllers (e.g., digital controller 320) may execute instructions (e.g., integrator instructions 315) stored in memory (e.g., memory 324) to perform the integration. In some embodiments, the one or more controllers may calculate the integral of a combination of the amplitudes of the extracted harmonic signals for each measured rotation angle, however, the disclosure is not so limited. A person of ordinary skill in the art would recognize that there are many ways to determine an integral of a signal, and that any of those techniques may be performed by the one or more controllers disclosed herein. The integration performed by the one or more controllers may result in an output that includes angle values corresponding to the harmonic signals at measured rotation angles. Because the extracted harmonic signals are an approximation of the periodic nonlinearities of the system, the angle values determined as a result of this integration may be a good approximation of the angle error at the measured rotation angles of the target, and therefore may be used as determined angle error values to correct rotation angle measurements of the sensor device.

In 540, an output (e.g., one or more measured rotation angles) may be linearized using the determined angle error values of 535. For example, one or more controllers (e.g., digital controller 320) may execute instructions (e.g., linearization instructions 317) stored in memory (e.g., memory 320) to linearize an output representing a detected angle of a target. For example, prior rotation angle measurements and/or future rotation angle measurements of a target determined by the one or more controllers of the sensor device may be adjusted based on the angle error values determined as a result of 535. That is, the angle error values from 535 may be values that are approximations of the measured angle error at each of the measured angles around 360 degrees of rotation. In 540, these angle error values may then be used as linearization coefficients to linearize the rotation angle measurements of the sensor device using, for example, any of the three approaches previously described. For example, these values may be used in a lookup table to adjust measured rotation angles of a target. As another example, these values may be used to compute linear functions that may be used to adjust measured rotation angles for certain ranges of measured rotation angles of a target. As a third example, harmonic functions may be calculated based on these values and the harmonic functions may be used as approximations of the angle errors to adjust measured rotation angles. A person of ordinary skill in the art would recognize that there are many other ways measured rotation angle values may be linearized using the angle error values determined in 535.

Example process 500 may be advantageous over other approaches to linearizing measurements of an angle sensor device in that no knowledge of the actual rotation angles of the target may be required in order to linearize the angle sensor device. Rather, example process 500 may provide angle error values that approximate the periodic nonlinearities of the system, and that can be used to compensate for measured rotation angle errors without needing to calibrate the system using knowledge of actual rotation angles of the target. Moreover, process 500 may be performed by the one or more controllers of a sensor device continuously, periodically, or upon demand, to update the angle error values being used to compensate for errors in rotation angle measurements. Thus, periodic nonlinearities that develop later in the system due, for example, to temperature shifts, mechanical shifts, wear and tear, or other factors, may be compensated after process 500 is performed again.

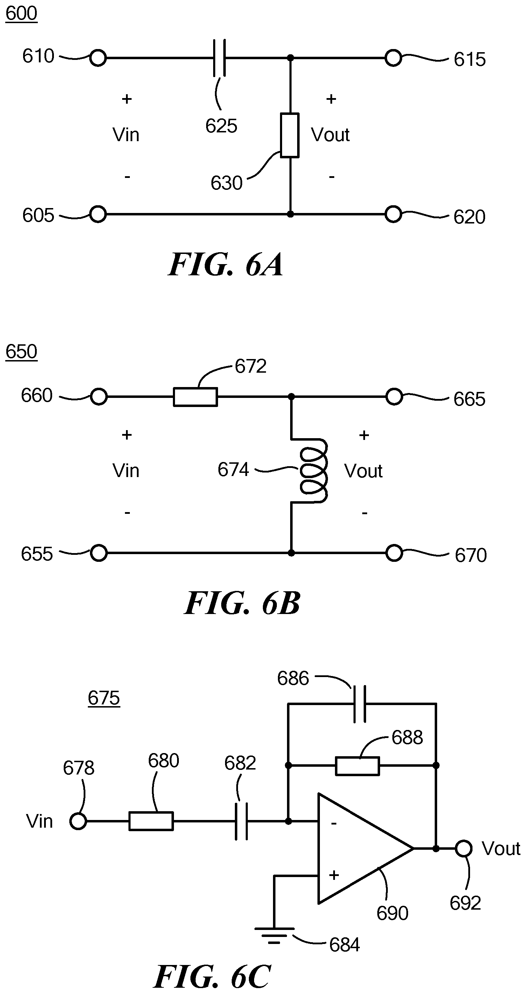

FIGs. 6A and 6B show example differentiator circuits 600 and 650, respectively, that may use only passive components and that may produce an output voltage (e.g., Vout) that is approximately proportional to a rate of change of an input voltage (e.g., Vin). For example, differentiator circuit 600 of FIG. 6A may include a capacitor 625 and resistor 630, and may produce an output voltage (e.g., Vout) between terminals 615 and 620 that is approximately proportional to a rate of change of an input voltage (e.g., Vin) between terminals 610 and 605. Differentiator circuit 650 of FIG. 6B may include a resistor 672 and inductor 675, and may produce an output voltage (e.g., Vout) between terminals 665 and 670 that is approximately proportional to a rate of change of an input voltage (e.g., Vin) between terminals 660 and 655.

FIG. 6C shows an example differentiator circuit 675 that may use an active component (e.g., an operational amplifier) and that may produce an output voltage (e.g., Vout) that is approximately proportional to a rate of change of an input voltage (e.g., Vin). For example, differentiator circuit 675 of FIG. 6C may include a resistor 680, capacitor 682, operational amplifier 690, capacitor 686, and resistor 688. A noninverting input of operational amplifier 690 may be connected to a ground 684. Resistor 688 may be connected to the inverting input of operational amplifier 690 and may act as a feedback resistor. Capacitor 686 may be included in parallel with resistor 688 to prevent differentiator circuit 675 from oscillating.

Any of the circuits shown in FIGs. 6A-6C may be used to differentiate the input voltage as a function of time, however the disclosure is not so limited. A person of ordinary skill in the art would recognize that there many different types and/or variations of circuits or techniques that may be used to differentiate an input voltage. Any of those circuits or techniques may be used as a differentiator circuit in a sensor device, such as differentiator circuit 370A or differentiator circuit 370B. One possible additional advantage of using a differentiator circuit instead of performing numerical differentiation with the one or more controllers of the sensor device, is that a differentiator circuit may also act as a filter that filters high frequency noise, thereby limiting the impact of high frequency noise on the angle and/or speed measurements.

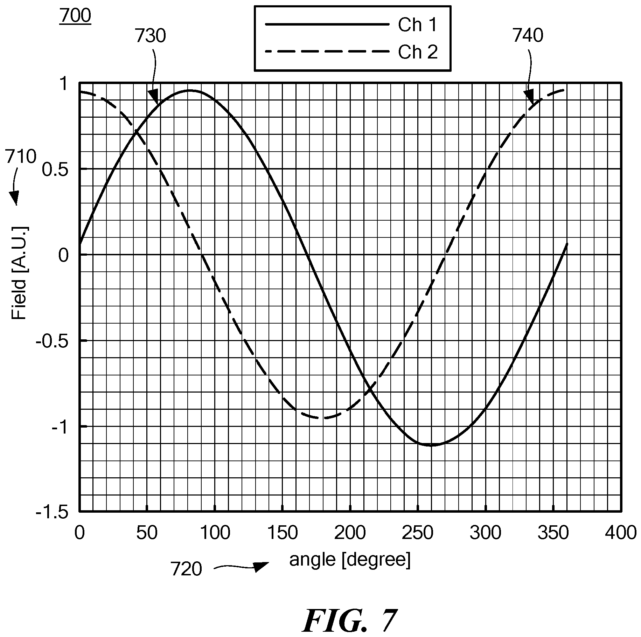

Simulations were performed to test the feasibility of using example process 500 to self-linearize an angle sensor device. FIG. 7 shows a graph 700 of a simulation performed in software of magnetic input signals received from a rotating target by orthogonal magnetic field sensing elements of a sensor device. Y-axis 710 represents an intensity of a magnetic field detected in atomic units. X-axis 720 represents a measured angle of rotation in degrees. Plot 730 represents a magnetic input signal detected by one of the magnetic field sensing elements (e.g., channel 1 (Ch 1)) and plot 740 represents a magnetic input signal detected by another of the magnetic field sensing elements (e.g., channel 2 (Ch 2)). As shown in FIG. 7, plot 730 is a sine function and plot 740 is a cosine function. In the simulation, the magnetic input signals had gain mismatch (e.g., the amplitudes of the signals are different), offset error (e.g., the signals are not both centered around 0 atomic units), and orthogonality error (e.g., the signals are not at exactly a 90 degree phase offset). A measured angle (e.g., angle θ) of a rotating target from which these signals would be output was calculated from the equation:

$$\text{Equation 5: } \theta = \operatorname{atan2}(\text{Ch 1, Ch 2})$$

In the simulation, the non-harmonicities due to the gain mismatch, offset error, and orthogonality error showed up in the measured rotation angle of the target when compared to actual rotation angle of the target.

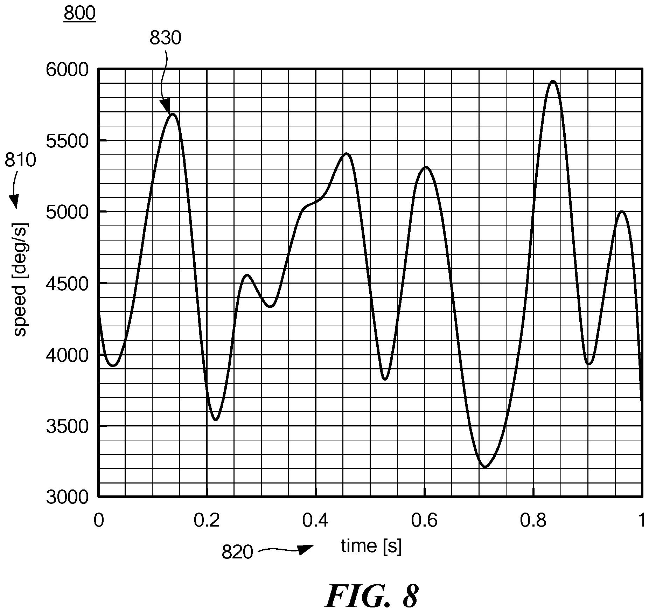

In the simulation, random movement of the target was simulated at rotation speeds selected in a range of 500-1000 revolutions per minute (rpm). FIG. 8 shows a graph 800 of the simulated speeds. Y-axis 810 represents simulated rotation speed in degrees per second (deg/s). X-axis 820 represents time in seconds (s). Plot 830 illustrates the simulated angular rotation speed in degrees per second for each time between 0 and 1 seconds.

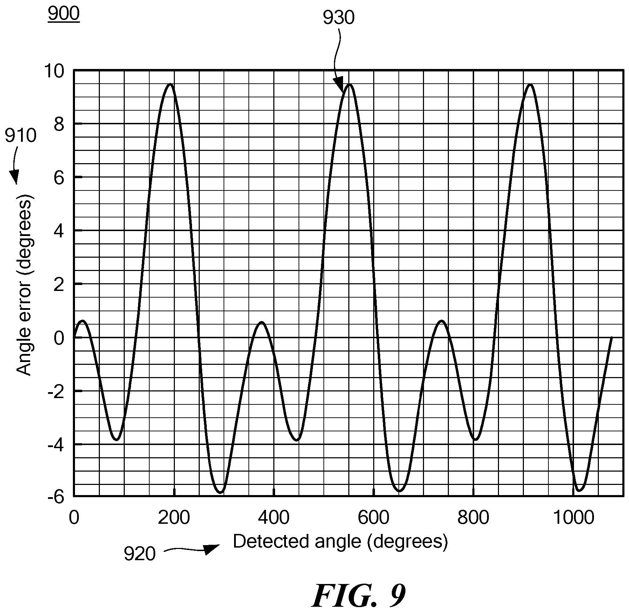

FIG. 9 shows a graph 900, from the simulation, of the resultant angle error between the measured rotation angle of the target and the actual rotation angle of the target. Y-axis 910 of graph 900 represents angle error between the measured rotation angle and the actual rotation angle in degrees. X-axis 920 of graph 900 represents the measured rotation angle in degrees. Plot 930 illustrates the angle error in degrees between the measured rotation angle of the target and the actual rotation angle of the target for each measured rotation angle of the target. This angle error is a result of the gain mismatch, offset, and orthogonality error between the magnetic field sensing elements in the simulation. As shown in FIG. 9, the angle error varied between 0 and almost 10 degrees of error. Graph 900 also demonstrates that the angle error is periodic. That is, the plot representing angle error generally repeats every 360 degrees.

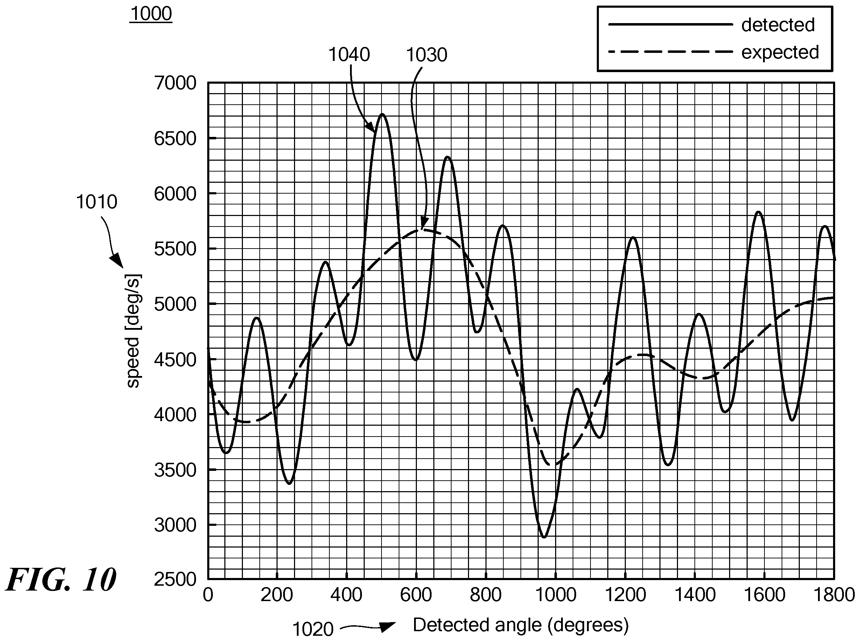

FIG. 10 shows a graph 1000, from the simulation, of the angular speed of rotation of the target for each measured rotation angle of the target. Y-axis 1010 represents angular rotation speed in degrees per second (deg/s). X-axis 1020 represents measured rotation angle of the target. Plot 1030 shows the rotation speed of the target for each measured rotation angle of the target. Thus, plot 1030 represents actual rotation speed (as input into the simulation, see, e.g., FIG. 8) of the target for each measured rotation angle of the target. Plot 1040 is the result of taking the derivative of the measured rotation angles of the target versus the sample time at which the measured rotation angles were determined. That is, plot 1040 was derived by numerically differentiating the measured rotation angles of a target, and thus is a simulation of performing a numerical differentiation of measured rotation angles versus sample time of an actual target, as discussed above with respect to example process 500 of FIG. 5. The difference between plots 1030 and 1040 is a result of the non-linearities input to the simulation (e.g., simulated gain mismatch, simulated offset error, simulated orthogonality error). However, as can be seen by comparing plot 1040 of FIG. 10 and plot 930 of FIG. 9, the output angle error propagates to the calculated speed signal. As a result, the same signature variation caused by the non-linearities of the system appears in the speed plot, which can advantageously be determined entirely by the sensor device, without having to know actual rotation angles of the target.

In the simulation, the calculated speed signal (i.e., plot 1040) was filtered as a function of the measured rotation angle over 720 degrees. An FFT was then performed, and first and second harmonics were identified from the signal. The first and second harmonic signals contained a close approximation of the harmonic oscillations of the calculated speed signal. The first and second harmonic signals were then integrated over time, which yielded an approximation of the angle errors between the measured rotation angles of the target and the actual rotation angles of the target. In the simulation, these angle error values were then used to linearize the rotation angle measurements of the target over several revolutions of the target.

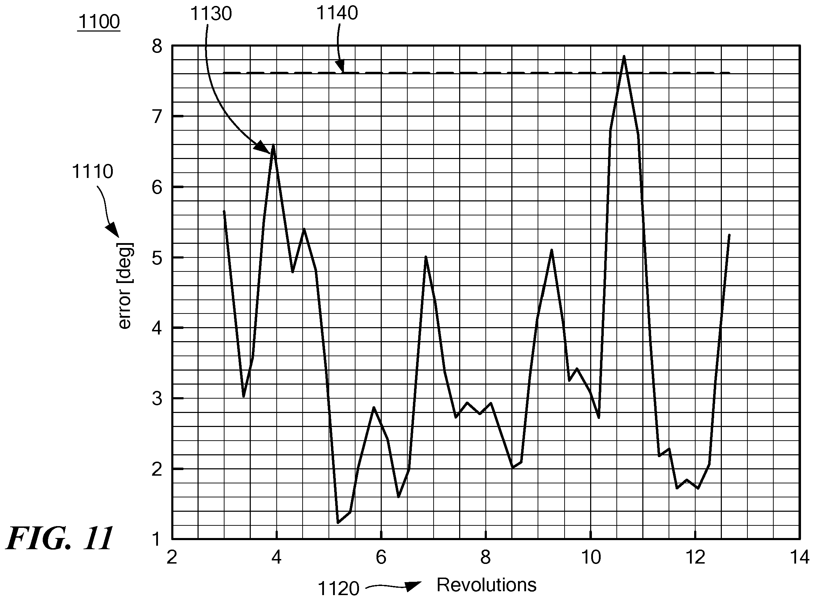

FIG. 11 shows a graph 1100, from the simulation, of the angle error values between the measured rotation angles of the target and the actual rotation angles of the target, with and without linearizing as described above. Y-axis 1110 represents angle error in degrees. X-axis 1120 represents simulated revolutions of the target. Plot 1140 shows the maximum angle error between the actual rotation angle of the simulated target and the measured rotation angle of the simulated target in each revolution based on the non-linearities of the simulation, with no linearization applied. Plot 1130 shows the maximum angle error between the actual rotation angle of the simulated target and the measured rotation angle of the simulated target in each revolution based on the non-linearities of the simulation, with linearization applied as discussed above. The simulation was performed by 1) defining a number of revolutions to be used in filtering the speed measurements (e.g., here two revolutions (i.e., 720 degrees of rotation)), 2) starting to determine approximate angle error after three revolutions of the simulated target, 3) calculating the approximate angle error values based on the data from the last two revolutions, and 4) moving to a next number of revolutions and repeating step 3. As can be seen from graph 1100 of FIG. 11, the maximum angle error between the measured rotation angle of the target and the actual rotation angle of the target is significantly lower throughout the 13 revolutions, with the exception of revolution 11 (which was only slightly worse than normal). Thus, using the systems, methods, and techniques described herein, the error between an actual rotation angle of a target and a rotation angle of a target as measured by a sensor device may be significantly reduced and significant improvement can be seen over multiple revolutions, without having knowledge of any actual rotation angles of the target. Optimizing the filtering of harmonics signals, use of input preprocessing, and use of continuous long-term updates may further improve performance of the systems, methods, and techniques disclosed herein.

FIG. 12 is a block diagram of an example computing environment for implementing embodiments of the present disclosure, in accordance with some embodiments. For example, rather than performing process 500 in one or more controllers of a sensor device, all or part of process 500 may be implemented in one or more computing system(s) 1230 connected to a sensor device 1210 over one or more networks 1220. For example, one or more computing systems 1230 may receive one or more signals, data, or other communications from sensor device 1210, may then perform more computation intensive tasks of process 500, and may then send the results of those tasks back to sensor device 1210 for use in linearizing angle measurements. For example, one or more lookup tables, linear functions, and/or harmonic functions may be determined in computing system(s) 1230 based on signals received from sensor device 1210, and may be sent from computing system(s) 1230 to sensor device 1210 for use in linearizing rotation angle measurements. Alternatively, measured angle and time information may be sent to computing system(s) 1230 and computing system(s) 1230 may linearize the angle measurements based on the angle and time information, using one or more parts or process 500. The arrangement and number of components in the computing environment is provided for purposes of illustration. Additional arrangements, number of components, and other modifications may be made, consistent with the present disclosure.

As shown in FIG. 12, the computing environment may include a sensor device 1210. Sensor device 1210 may, for example, be a sensor device as previously described (e.g., sensor device 300 of FIGs. 3A, 3B). Sensor device 1210 may be coupled to one or more computing systems 1230 over one or more networks 1220. Sensor device 1210 may communicate signals, such as signals received from and/or derived from one or more magnetic field sensing elements (e.g., magnetic field sensing elements 302A, 302B of FIGs. 3A, 3B) to a computing system 1230 over the one or more networks 1220. The signals may, for example, be voltage signals received from the magnetic field sensing devices, measured rotation angles and sample times as recorded by one or more controllers (e.g. controller 320 of FIGs. 3A, 3B) of sensor device 1210, determined speed signals, determined angle error values, or any other output described in relation to process 500 of FIG. 5.

Network(s) 1220 may include, for example, one or more wired and/or wireless networks. By way of example, the network(s) 1220 may include a conductor over which current signals may be transmitted, an Inter-Integrated Circuit ($I_2C$) network, a Controller Area Network (CAN) network, a WiFi network, an Ethernet network, a Universal Serial Bus (USB) network, a local area network (LAN) network, a cellular (e.g., 5G) network, and/or any other suitable type of network.

Computing system(s) 1230 may include one or more computing devices (see, e.g., computing device 1310 of FIG. 13). A computing device may be, for example, a computing device that may be used to perform some or all of process 500 of FIG. 5. For example, rather than having to include a controller or processor with significant processing ability (and perhaps large size and/or high cost) in a sensor device, a less sophisticated controller may be included in a sensor device and signals sent to another computing device such that the other computing device may perform the more complicated and processor-intensive tasks. A computing device 1310 may be, for example, an integrated circuit connected to a sensor device. Alternatively, a computing device 1310 may be a computer, such as a laptop computer, mobile phone, tablet, personal computer, server computer, or other type of computer.

FIG. 13 is a block diagram 1300 of a computing device 1310, consistent with embodiments of the present disclosure. Computing device 1310 may, for example, perform part of all of process 500 of FIG. 5 based on signals received over one or more networks (e.g., network(s) 1220) from a sensor device (e.g., sensor device 1210, sensor device 300). As shown in FIG. 13, a computing device 1310 may include one or more processors or controllers 1320 for executing instructions. Processors or controllers suitable for the execution of instructions may include, by way of example, both general and special purpose (e.g., application specific integrated circuit (ASIC) processors or controllers. A computing device 1310 may also include one or more input/output (I/O) devices 1330. By way of example, I/O devices 1330 may include keys, buttons, mice, joysticks, styluses, etc. Keys and/or buttons may be physical and/or virtual (e.g., provided on a touch screen interface). A computing device 1310 may be connected to one or more displays (not shown) via I/O 1330. A display may be implemented using one or more display panels, which may include, for example, one or more cathode ray tube (CRT) displays, liquid crystal displays (LCDs), plasma displays, light emitting diode (LED) displays, touch screen type displays, organic light emitting diode (OLED) displays, or any other type of suitable display.

A computing device 1310 may include one or more storage devices configured to store data and/or software instructions used by processor(s) or controller(s) 1320 to perform operations consistent with disclosed embodiments. For example, computing device 1310 may include main memory 1340 configured to store one or more software programs that, when executed by processor(s) or controller(s) 1320, cause processor(s) or controller(s) 1320 to perform functions or operations consistent with disclosed embodiments.

By way of example, main memory 1340 may include NOR and/or NAND flash memory devices, read only memory (ROM) devices, random access memory (RAM) devices, etc. A computing device 1310 may also include one or more storage mediums 1350. By way of example, storage medium(s) 1350 may include hard drives, solid state drives, etc. A computing device 1310 may include any number of main memories 1340 and storage mediums 1350. A main memory 1340 or storage medium 1350 may, in some embodiments, be a non-transitory computer-readable medium.

A computing device 1310 may further include one or more communication interfaces 1360. Communication interface(s) 1360 may allow one or more signals to be received from a sensor device (e.g., sensor device 1210, sensor device 300) over one or more networks 1220, and may allow one or more signals to be transmitted to the sensor device. Example communication interface(s) 1360 include a modem, network interface card (e.g., Ethernet card), communications port, antenna, conductor over which current signals may be transmitted, an Inter-Integrated Circuit ($I_2C$) interface, a Controller Area Network (CAN) network interface, a WiFi interface, an Ethernet a Universal Serial Bus (USB) interface, a local area network (LAN) network interface, a cellular (e.g., 5G) interface, and/or any other suitable type of interface for transmitting and/or receiving signals or other information. Communication interface(s) 1360 may transmit software, data, or information in the form of signals, which may be electronic, electromagnetic, optical, and/or other types of signals. The signals may be provided to/from communications interface 1360 via a communications path (e.g., network(s) 1220), which may be implemented using wired, wireless, cable, fiber optic, radio frequency (RF), and/or other communications channels.

Although systems, methods, and techniques disclosed herein have been primarily discussed herein with respect to magnetic sensors, a person of ordinary skill in the art would recognize that the systems, methods, and techniques described herein may be used to linearized rotation angle measurements of any rotation angle measurement system that has periodic nonlinearities, such as, for example, optical rotation angle sensor systems. The systems, methods, and techniques were described with reference to magnetic rotation angle sensor systems by way of example to explain the details of the disclosure, but the scope of systems, methods, and techniques described herein should not be limited to these examples.

As used herein, the terms "processor" and "controller" are used to describe electronic circuitry that performs a function, an operation, or a sequence of operations. The function, operation, or sequence of operations can be hard coded into the electronic circuit or soft coded by way of instructions held in a memory device. The function, operation, or sequence of operations can be performed using digital values or using analog signals. In some embodiments, the processor or controller can be embodied in an application specific integrated circuit (ASIC), which can be an analog ASIC or a digital ASIC, in a microprocessor with associated program memory and/or in a discrete electronic circuit, which can be analog or digital. A processor or controller can contain internal processors or modules that perform portions of the function, operation, or sequence of operations. Similarly, a module can contain internal processors or internal modules that perform portions of the function, operation, or sequence of operations of the module.

While electronic circuits shown in figures herein may be shown in the form of analog blocks or digital blocks, it will be understood that the analog blocks can be replaced by digital blocks that perform the same or similar functions and the digital blocks can be replaced by analog blocks that perform the same or similar functions. Analog-to-digital or digital-to-analog conversions may not be explicitly shown in the figures but should be understood.

Various embodiments of the systems, methods, and techniques are described herein with reference to the related drawings. Alternative embodiments can be devised without departing from the scope of the described concepts. It is noted that various connections and positional relationships (e.g., over, below, adjacent, etc.) are set forth between elements in the following description and in the drawings. These connections and/or positional relationships, unless specified otherwise, can be direct or indirect, and the present invention is not intended to be limiting in this respect. Accordingly, a coupling of entities can refer to either a direct or an indirect coupling, and a positional relationship between entities can be a direct or indirect positional relationship. As an example of an indirect positional relationship, references in the present description to element or structure A over element or structure B include situations in which one or more intermediate elements or structures (e.g., element C) is between elements A and B regardless of whether the characteristics and functionalities of elements A and/or B are substantially changed by the intermediate element(s).

Furthermore, it should be appreciated that relative, directional or reference terms (e.g. such as "above," "below," "left," "right," "top," "bottom," "vertical," "horizontal," "front," "back," "rearward," "forward," etc.) and derivatives thereof are used only to promote clarity in the description of the figures. Such terms are not intended as, and should not be construed as, limiting. Such terms may simply be used to facilitate discussion of the drawings and may be used, where applicable, to promote clarity of description when dealing with relative relationships, particularly with respect to the illustrated embodiments. Such terms are not, however, intended to imply absolute relationships, positions, and/or orientations. For example, with respect to an object or structure, an "upper" or "top" surface can become a "lower" or "bottom" surface simply by turning the object over. Nevertheless, it is still the same surface and the object remains the same. Also, as used herein, "and/or" means "and" or "or," as well as "and" and "or." Moreover, all patent and non-patent literature cited herein is hereby incorporated by references in their entirety.

The terms "disposed over," "overlying," "atop," "on top," "positioned on" or "positioned atop" mean that a first element, such as a first structure, is present on a second element, such as a second structure, where intervening elements or structures (such as an interface structure) may or may not be present between the first element and the second element. The term "direct contact" means that a first element, such as a first structure, and a second element, such as a second structure, are connected without any intermediary elements or structures between the interface of the two elements. The term "connection" can include an indirect connection and a direct connection.

In the foregoing detailed description, various features are grouped together in one or more individual embodiments for the purpose of streamlining the disclosure. This method of disclosure is not to be interpreted as reflecting an intention that each claim requires more features than are expressly recited therein. Rather, inventive aspects may lie in less than all features of each disclosed embodiment.

References in the disclosure to "one embodiment," "an embodiment," "some embodiments," or variants of such phrases indicate that the embodiment(s) described can include a particular feature, structure, or characteristic, but every embodiment can include the particular feature, structure, or characteristic. Moreover, such phrases are not necessarily referring to the same embodiment(s). Further, when a particular feature, structure, or characteristic is described with reference to one embodiment, knowledge of one skilled in the art may be relied upon to affect such feature, structure, or characteristic in connection with other embodiments whether or not explicitly described.

The disclosed subject matter is not limited in its application to the details of construction and to the arrangements of the components set forth in the following description or illustrated in the drawings. The disclosed subject matter is capable of other embodiments and of being practiced and carried out in various ways. As such, those skilled in the art will appreciate that the conception, upon which this disclosure is based, may readily be utilized as a basis for the designing of other structures, methods, and systems for carrying out the several purposes of the disclosed subject matter. Therefore, the claims should be regarded as including such equivalent constructions insofar as they do not depart from the spirit and scope of the disclosed subject matter.

Although the disclosed subject matter has been described and illustrated in the foregoing exemplary embodiments, it is understood that the present disclosure has been made only by way of example, and that numerous changes in the details of implementation of the disclosed subject matter may be made without departing from the spirit and scope of the disclosed subject matter.

All publications and references cited herein are expressly incorporated herein by reference in their entirety.

**Claims**

1. A method of linearizing an output representing a detected angle of a target, comprising:

   determining initial values of angles of rotation of the target based on received signal values representative of the target;
   determining speeds of rotation of the target corresponding to the initial values;
   extracting the speeds corresponding to a span of the initial values;
   identifying signals of different frequencies from the extracted speeds;
   determining angle error values based on the identified signals; and
   linearizing the output based on the determined angle error values.

2. The method of claim 1, further comprising:

   receiving the signal values representative of the target from sensing elements;
   measuring an elapsed amount of time during which the signal values are received; and
   determining the speeds of rotation based on the initial values and the elapsed amount of time.

3. The method of claim 1, wherein the span of the initial values corresponds to 360° of rotation.

4. The method of claim 3, wherein a first one of the signals identified from the extracted speeds includes a frequency having one period over the 360°, and a second one of the signals identified from the extracted speeds includes a frequency having two periods over the 360°.

5. The method of claim 3, wherein the signals identified from the extracted speeds do not include signals having frequencies with eight or more periods over the 360°.

6.  The method of claim 2, wherein the signal values are received from two different sensing elements that are placed orthogonally with respect to each other so that sensing by a first one of the sensing elements is indicative of a sine function and sensing by a second one of the sensing elements is indicative of a cosine function when the two different sensing elements are aligned with the target, and wherein each of the initial values of angles of rotation is calculated as an arctangent of a first signal value received from one of the sensing elements and a second signal value received from the other sensing element, the first signal value and the second signal value being received at the same time.

7.  The method of claim 1, wherein the speeds of rotation are determined by numerically differentiating the initial values of angles of rotation with respect to time.

8.  The method of claim 1, wherein the speeds of rotation are determined by differentiating the initial values of angles of rotation with respect to time using a differentiator circuit.

9.  The method of claim 1, wherein identifying the signals of different frequencies comprises extracting the signals with a multi-band pass filter circuit.

10. The method of claim 1, wherein identifying the signals of different frequencies comprises:

    computing a Fourier transform of the extracted speeds; and
    identifying from the extracted speeds a first signal having one period over a span of 360° and a second signal having two periods over a span of 360° based on the Fourier transform.

11. The method of claim 1, wherein determining the angle error values further comprises integrating the identified signals of different frequencies to obtain the angle error values as a function of time.

12. The method of claim 1, wherein the determined angle error values are utilized as an approximation of an error between an angle of the target sensed by sensing elements as compared to an actual angle of the target.

13. The method of claim 1, wherein linearizing the output further comprises applying the angle error values as linearization coefficients to calculate a detected angle of the target.

14. A device, comprising:

    a memory storing instructions; and
    a controller that, when executing the instructions, is configured to:

        determine initial values of angles of rotation of a target based on received signal values representative of the target;
        determine speeds of rotation of the target corresponding to the initial values;
        extract the speeds corresponding to a span of the initial values;
        identify signals of different frequencies from the extracted speeds;
        determine angle error values based on the identified signals; and
        linearize an output corresponding to detected angles of the target based on the determined angle error values.

15. The device of claim 14, further comprising sensing elements, wherein the controller, when executing the instructions, is further configured to:

    receive the signal values representative of the target from the sensing elements;
    measure an elapsed amount of time during which the signal values are received; and
    determine the speeds of rotation based on the initial values and the elapsed amount of time.

16. The device of claim 15, wherein the signal values are received by the controller from two different sensing elements that are placed orthogonally with respect to each other so that sensing by a first one of the sensing elements is indicative of a sine function and sensing by a second one of the sensing elements is indicative of a cosine function when the two different sensing elements are aligned with the target, and wherein each of the initial values of angles of rotation is calculated by the controller as an arctangent of a first signal value received from one of the sensing elements and a second signal value received from the other sensing element, the first signal value and the second signal value being received by the controller at the same time.

17. The device of claim 14, or the method of claim 1, wherein the target is a magnet and the signal values representative of the target are provided by one or more of a giant magnetoresistor (GMR) field sensing element, a tunnel magnetoresistor (TMR) field sensing element, a Hall effect field sensing element, or a receiving coil field sensing element.

18. The device of claim 14, wherein the controller, when executing the instructions, is further configured to apply the angle error values as linearization coefficients to calculate a detected angle of the target.

19. A non-transitory computer-readable medium storing instructions that, when executed by a controller, cause the controller to:

    determine initial values of angles of rotation of a target based on received signal values representative of the target;
    determine speeds of rotation of the target corresponding to the initial values;
    extract the speeds for a span of the initial values;
    identify signals of different frequencies from the extracted speeds;
    determine angle error values based on the identified signals; and
    linearize an output corresponding to detected angles of the target based on the
    determined angle error values.

FIG. 1B

FIG. 1A

200

FIG. 2A

250

FIG. 2B

**FIG. 3A**

300

ROTATING TARGET 301

SIGNAL_PATH_1 310A
302A  303A  306A  307A  ADC 308A  309A

SIGNAL_PATH_2 310B
302B  303B  306B  307B  ADC 308B  309B

MEMORY 324

ANGLE CALCULATOR 311

SPEED CALCULATOR 312

SPEED EXTRACTOR 313

FREQUENCY IDENTIFIER 314

INTEGRATOR 315

LINEARIZATION 317

VOLTAGE REGULATOR(S) 326

DIGITAL CONTROLLER 320

OUTPUT INTERFACE 355

360

FIG. 3B

**FIG. 4**

500

```
┌─────────────────────────────┐
│  Receive signals representing │
│         a target              │
│           510                 │
└─────────────────────────────┘
              │
              ▼
┌─────────────────────────────┐
│  Determine initial values of  │
│     angles of rotation        │
│           515                 │
└─────────────────────────────┘
              │
              ▼
┌─────────────────────────────┐
│  Determine speeds of rotation │
│           520                 │
└─────────────────────────────┘
              │
              ▼
┌─────────────────────────────┐
│       Extract speeds          │
│           525                 │
└─────────────────────────────┘
              │
              ▼
┌─────────────────────────────┐
│  Identify signals of different│
│       frequencies             │
│           530                 │
└─────────────────────────────┘
              │
              ▼
┌─────────────────────────────┐
│   Determine approximate       │
│       angle error             │
│           535                 │
└─────────────────────────────┘
              │
              ▼
┌─────────────────────────────┐
│  Linearize angle measurements │
│           540                 │
└─────────────────────────────┘
```

## FIG. 5

600

**FIG. 6A**

650

**FIG. 6B**

675

**FIG. 6C**

*FIG. 7*

*FIG. 8*

FIG. 9

**FIG. 10**

FIG. 11

EP 4 650 724 A1

Sensor
1210

Network(s)
1220

Computing
system(s)
1230

**FIG. 12**

1300

Computing Device
1310

Processor/Controller
1320

I/O
1330

Main Memory
1340

Storage Medium
1350

Communications Interface
1360

**FIG. 13**

Europäisches
Patentamt
European
Patent Office
Office européen
des brevets

# EUROPEAN SEARCH REPORT

**Application Number**

EP 25 16 2942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2019 215949 B4 (INFINEON TECHNOLOGIES AG [DE]) 8 April 2021 (2021-04-08) * figures 2-7 * * paragraphs [0035] - [0050] * * paragraphs [0070] - [0073] * * paragraphs [0003], [0007] * | 1-19 | INV. G01D18/00 |
| A | US 2023/384082 A1 (TSUBOTA MASASHI [JP]) 30 November 2023 (2023-11-30) * figure 2 * | 1-19 | |
| A | EP 3 901 584 B1 (MITSUBISHI ELECTRIC CORP [JP]) 10 August 2022 (2022-08-10) * figure 1 * | 1-19 | |
| A | US 11 555 716 B1 (RIGONI NICOLÁS [US] ET AL) 17 January 2023 (2023-01-17) * figure 5 * | 1-19 | |
| A | US 11 175 160 B2 (ALLEGRO MICROSYSTEMS LLC [US]) 16 November 2021 (2021-11-16) * figure 5 * | 1-19 | **TECHNICAL FIELDS SEARCHED (IPC)** G01D |
| A | DE 10 2021 112732 A1 (INFINEON TECHNOLOGIES AG [DE]) 17 November 2022 (2022-11-17) * claim 1 * | 1-19 | |

The present search report has been drawn up for all claims

| Place of search | Date of completion of the search | Examiner |
|---|---|---|
| Munich | 5 August 2025 | Kuchenbecker, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 2942

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2025

| Patent document cited in search report | | Publication date | Patent family member(s) | | Publication date |
|---|---|---|---|---|---|
| DE 102019215949 B4 | | 08-04-2021 | DE 102019215949 B4 | | 08-04-2021 |
| | | | US 2021116264 A1 | | 22-04-2021 |
| US 2023384082 A1 | | 30-11-2023 | NONE | | |
| EP 3901584 B1 | | 10-08-2022 | CN 113196014 A | | 30-07-2021 |
| | | | EP 3901584 A1 | | 27-10-2021 |
| | | | JP 7055222 B2 | | 15-04-2022 |
| | | | JP WO2020129144 A1 | | 14-10-2021 |
| | | | US 2021323603 A1 | | 21-10-2021 |
| | | | WO 2020129144 A1 | | 25-06-2020 |
| US 11555716 B1 | | 17-01-2023 | NONE | | |
| US 11175160 B2 | | 16-11-2021 | NONE | | |
| DE 102021112732 A1 | | 17-11-2022 | DE 102021112732 A1 | | 17-11-2022 |
| | | | US 2022364891 A1 | | 17-11-2022 |

EPO FORM P0459

For more details about this annex : see Official Journal of the European Patent Office, No. 12/82